# EUROPÄISCHE PATENTSCHRIFT

(11) **EP 4 211 340 B1**
(45) Veröffentlichungstag und Bekanntmachung des Hinweises auf die Patenterteilung: **10.12.2025**
(21) Anmeldenummer: 21748603.4
(22) Anmeldetag: 21.07.2021
(51) Int. Cl.: F01N 11/00

(54) **VERFAHREN ZUM BETREIBEN EINER ABGASREINIGUNGSEINRICHTUNG FÜR EIN KRAFTFAHRZEUG SOWIE ENTSPRECHENDE ABGASREINIGUNGSEINRICHTUNG**
METHOD FOR OPERATING AN EXHAUST-GAS CLEANING DEVICE FOR A MOTOR VEHICLE AND CORRESPONDING EXHAUST-GAS CLEANING DEVICE
PROCÉDÉ DE FONCTIONNEMENT D'UN DISPOSITIF D'ÉPURATION DES GAZ D'ÉCHAPPEMENT POUR UN VÉHICULE À MOTEUR ET DISPOSITIF D'ÉPURATION DES GAZ D'ÉCHAPPEMENT CORRESPONDANT

(30) Priorität: 14.09.2020 DE 102020123865
(43) Veröffentlichungstag der Anmeldung: 19.07.2023
(73) Patentinhaber: AUDI Aktiengesellschaft, 85057 Ingolstadt (DE)
(72) Erfinder: ODENDALL, Bodo, 85101 Lenting (DE)
(74) Vertreter: Dietz, Christopher Friedrich
(86) Internationale Anmeldenummer: PCT/EP2021/070412
(87) Internationale Veröffentlichungsnummer: WO 2022/053211

(56) Entgegenhaltungen:
- EP-A1- 3 015 695
- DE-A1- 102006 014 916
- DE-A1- 102010 050 055
- DE-A1- 102016 213 767
- US-A1- 2003 154 709
- US-A1- 2012 310 512

## Beschreibung

Die Erfindung betrifft ein Verfahren zum Betreiben einer Abgasreinigungseinrichtung für ein Kraftfahrzeug, wobei die Abgasreinigungseinrichtung über einen Fahrzeugkatalysator, eine stromaufwärts des Fahrzeugkatalysators angeordnete erste Lambdasonde und eine stromabwärts des Fahrzeugkatalysators angeordnete zweite Lambdasonde verfügt, wobei zeitlich zwischen einem ersten Signalsprung eines Messwerts der ersten Lambdasonde in eine erste Richtung und einem zweiten Signalsprung des Messwerts in eine der ersten Richtung entgegengesetzte zweite Richtung ein Signalgradient und nach dem zweiten Signalsprung eine Signalverzögerung eines Messwerts der zweiten Lambdasonde ermittelt wird, wobei die Signalverzögerung einer Zeitdauer zwischen dem zweiten Signalsprung und einer Reaktion des Messwerts der zweiten Lambdasonde auf den zweiten Signalsprung entspricht. Die Erfindung betrifft weiterhin eine Abgasreinigungseinrichtung für ein Kraftfahrzeug.

Aus dem Stand der Technik ist beispielsweise die Druckschrift DE 10 2004 055 231 B3 bekannt. Diese beschreibt ein Verfahren zur Lambdaregelung bei einer Brennkraftmaschine mit einem Katalysator im Abgastrakt und mindestens einer Lambdasonde, die innerhalb des Katalysators angeordnet ist. Bei dieser Anordnung der upstream-Sonde treten Signalverzögerungen auf, die die Geschwindigkeit des Lambdareglers reduzieren. Zum Ausgleich liegen die Messsignale der ersten Lambdasonde an einer Lambdaauswerteeinheit an, die eine Verzögerung der Messsignale korrigiert, und das korrigierte Lambdasondensignal liegt an einer Einheit zur Lambdaregelung an. Beide Lambdasonden sind mit einer Einheit zur Lambdaregelung verbunden.

Weiterhin offenbart die Druckschrift DE 10 2016 213 767 A1 ein Verfahren zur Diagnose einer Abgasanlage einer Brennkraftmaschine mit mindestens einem Drei-Wege-Katalysator, mindestens einem Vier-Wege-Katalysator und mindestens einer binären Lambdasonde, bei dem eine Überprüfung einer Funktionstüchtigkeit der mindestens einen binären Lambdasonde und/oder des mindestens einen Vier-Wege-Katalysators anhand einer Lambdaänderung bei einem Wechsel der Brennkraftmaschine von einem Magerbetrieb in einen auf den Schubbetrieb folgenden Fettbetrieb zum Ausräumen des mindestens einen Drei-Wege-Katalysators erfolgt.

Schließlich beschreibt die Druckschrift US 2016/0 160 778 A1 ein Diagnosesystem für eine Brennkraftmaschine. Das Diagnosesystem berechnet eine erste Kennlinie der Änderung des Luft-Kraftstoff-Verhältnisses zu dem Zeitpunkt, in dem das Luft-Kraftstoff-Verhältnis einen ersten Luft-Kraftstoff-Verhältnis-Bereich passiert, der magerer als ein stöchiometrisches Luft-Kraftstoff-Verhältnis ist, und eine zweite Kennlinie der Änderung des Luft-Kraftstoff-Verhältnisses zu der Zeit, wenn das Luft-Kraftstoff-Verhältnis einen zweiten Luft-Kraftstoff-Verhältnis-Bereich passiert, der ein stöchiometrisches Luft-Kraftstoff-Verhältnis umfasst. Das Diagnosesystem diagnostiziert eine Abweichung des Sensors basierend auf der ersten Kennlinie und der zweiten Kennlinie.

Es ist Aufgabe der Erfindung, ein Verfahren zum Betreiben einer Abgasreinigungseinrichtung für ein Kraftfahrzeug vorzuschlagen, welches gegenüber bekannten Verfahren Vorteile aufweist, insbesondere eine einfache Überprüfung einer Funktionsfähigkeit der zweiten Lambdasonde und/oder des Fahrzeugkatalysators ermöglicht.

Dies wird erfindungsgemäß mit einem Verfahren zum Betreiben einer Abgasreinigungseinrichtung für ein Kraftfahrzeug mit den Merkmalen des Anspruchs 1 erreicht. Dabei ist vorgesehen, dass auf einen Defekt des Fahrzeugkatalysators erkannt wird, falls der Signalgradient kleiner als ein Signalgradientenschwellenwert und die Signalverzögerung kleiner als ein Signalverzögerungsschwellenwert ist.

Vorteilhafte Ausgestaltungen mit zweckmäßigen Weiterbildungen der Erfindung sind in den abhängigen Ansprüchen angegeben.

Das Verfahren dient zum Betreiben der Abgasreinigungseinrichtung. Die Abgasreinigungseinrichtung ist beispielsweise Bestandteil des Kraftfahrzeugs, kann selbstverständlich jedoch auch separat von diesem vorliegen. Die Abgasreinigungseinrichtung ist bevorzugt Teil einer Antriebseinrichtung des Kraftfahrzeugs, die dem Antreiben des Kraftfahrzeugs und insoweit dem Bereitstellen eines auf das Antreiben des Kraftfahrzeugs gerichteten Antriebsdrehmoments dient. Zur Erzeugung des Antriebsdrehmoments verfügt die Antriebseinrichtung über wenigstens ein Antriebsaggregat.

Die Antriebseinrichtung, insbesondere das Antriebsaggregat, erzeugt während seines Betriebs Abgas, welches in Richtung einer Außenumgebung der Antriebseinrichtung abgeführt wird. Strömungstechnisch zwischen dem Antriebsaggregat und der Außenumgebung liegt die Abgasreinigungseinrichtung vor. Die Abgasreinigungseinrichtung dient einer Reinigung des Abgases, also dem Umsetzen von Schadstoffen in ungefährlichere Produkte. Der Abgasreinigungseinrichtung wird das von dem Antriebsaggregat erzeugte Abgas zugeführt und nach dem Durchströmen der Abgasreinigungseinrichtung in die Außenumgebung entlassen.

Die Reinigung des Abgases wird von der Abgasreinigungseinrichtung mithilfe des Fahrzeugkatalysators vorgenommen. Der Fahrzeugkatalysator liegt beispielsweise als Drei-Wege-Katalysator, Oxidationskatalysator, Speicherkatalysator, insbesondere NOₓ-Speicherkatalysator, oder als SCR-Katalysator vor. In den Fahrzeugkatalysator kann ein Partikelfilter integriert sein. Bezüglich einer Strömungsrichtung des Abgases durch die Abgasreinigungseinrichtung beziehungsweise durch den Fahrzeugkatalysator stromaufwärts des Fahrzeugkatalysators liegt die erste Lambdasonde vor, wohingegen die zweite Lambdasonde bezüglich der Strömungsrichtung des Abgases stromabwärts des Fahrzeugkatalysators angeordnet ist.

Die Lambdasonden dienen dem Ermitteln des Verbrennungsluftverhältnisses λ. Hierzu messen sie insbesondere einen in dem Abgas vorliegenden Restsauerstoffgehalt. Jede der Lambdasonden liefert entsprechend einen Messwert. Die erste Lambdasonde liegt vorzugsweise als Breitbandlambdasonde und die zweite Lambdasonde als Sprunglambdasonde vor. In diesem Fall wird der Messwert der ersten Lambdasonde vorzugsweise in Form des Verbrennungsluftverhältnisses λ und der Messwert der zweiten Lambdasonde als Spannung angegeben.

Die Breitbandlambdasonde zeichnet sich dadurch aus, dass sie eine Ermittlung des Verbrennungsluftverhältnisses über einen weiten Bereich hinweg zulässt. Beispielsweise verfügt die Breitbandlambdasonde hierzu über eine Pumpzelle und eine Nernstzelle, zwischen welchen ein Messvolumen vorliegt. Das Messvolumen ist über einen Diffusionskanal, der durch die Pumpzelle führt, strömungstechnisch an eine das Abgas führende Abgasleitung angeschlossen. Eine Stromstärke eines durch die Pumpzelle fließenden elektrischen Stroms wird derart eingestellt, dass in dem Messvolumen ein Verbrennungsluftverhältnis von λ = 1 vorliegt. Hierzu wird ein Messwert der Nernstzelle herangezogen, welcher auf einen dem Verbrennungsluftverhältnis von λ = 1 entsprechenden Wert eingestellt wird, insbesondere mittels einer Regelung.

Die Sprunglambdasonde ist im Vergleich hierzu einfacher aufgebaut und besteht beispielsweise lediglich aus einer Nernstzelle. Eine Kennlinie der Sprunglambdasonde zeichnet sich dadurch aus, dass ihr Messwert im Bereich eines Verbrennungsluftverhältnisses von λ = 1 einen großen Gradient aufweist. Der Gradient des Messwerts ist also in einem Bereich um λ = 1 herum deutlich größer als außerhalb dieses Bereichs.

Beispielsweise wird der Messwert der ersten Lambdasonde zur Durchführung einer Lambdaregelung der Antriebseinrichtung beziehungsweise des Antriebsaggregats herangezogen. Der Messwert der zweiten Lambdasonde dient hingegen dem Durchführen einer Trimmregelung. Die Trimmregelung wird dazu verwendet, um eventuelle Abweichungen der ersten Lambdasonde zu kompensieren, sodass ein genaueres Durchführen der Lambdaregelung erfolgt.

Da die zweite Lambdasonde für die Genauigkeit der Lambdaregelung von essentieller Bedeutung ist, ist es notwendig, Fehler der zweiten Lambdasonde möglichst rasch zu diagnostizieren, um entsprechende Gegenmaßnahmen einleiten zu können. Beispielsweise ist es vorgesehen, bei einem Defekt der zweiten Lambdasonde eine Nennleistung der Antriebseinrichtung beziehungsweise des Antriebsaggregats zu reduzieren. Zur Diagnose der zweiten Lambdasonde werden der Signalgradient des Messwerts der zweiten Lambdasonde und die Signalverzögerung des Messwerts ermittelt. Dieses Ermitteln erfolgt in zeitlicher Abhängigkeit von dem ersten Signalsprung und dem zweiten Signalsprung des Messwerts der ersten Lambdasonde. So wird der Signalgradient zeitlich gesehen zwischen dem ersten Signalsprung und dem zweiten Signalsprung bestimmt, die Signalverzögerung zeitlich nach dem zweiten Signalsprung.

Unter dem Signalgradient ist eine Steigung des Messwerts der zweiten Lambdasonde über der Zeit zu verstehen, wohingegen die Signalverzögerung einen Nachlauf des Messwerts der zweiten Lambdasonde beschreibt. Die Signalverzögerung entspricht also einer zeitlichen Dauer zwischen dem zweiten Signalsprung und einer Reaktion des Messwerts der zweiten Lambdasonde auf diesen zweiten Signalsprung. Unter dem ersten Signalsprung und dem zweiten Signalsprung sind Sprünge des Messwerts der ersten Lambdasonde zu verstehen, also Messwerte, für welche ein Gradient des Messwerts, insbesondere ein Absolutwert des Gradienten, einen Gradientenschwellenwert überschreitet. Es ist hierbei also zunächst irrelevant, ob der Messwert größer oder kleiner wird. Von Bedeutung ist lediglich, dass der vorzeichenbereinigte Gradient den Gradientenschwellenwert überschreitet.

Der Signalgradient und die Signalverzögerung werden ausgewertet, um die Diagnose der zweiten Lambdasonde vorzunehmen. Grundsätzlich könnte es vorgesehen sein, bereits dann auf den Defekt der zweiten Lambdasonde zu erkennen, falls der Signalgradient kleiner als der Signalgradientenschwellenwert ist. Unter dem Signalgradientenschwellenwert ist ein Schwellenwert für den Signalgradienten zu verstehen, welcher bevorzugt empirisch ermittelt wurde und ab dessen Unterschreiten durch den Signalgradient von einem Defekt der zweiten Lambdasonde ausgegangen werden kann. Allerdings ist hierbei zu beachten, dass das Messsignal der zweiten Lambdasonde nicht unmittelbar dem Messsignal der ersten Lambdasonde folgt, sondern auch von dem Fahrzeugkatalysator, insbesondere einem Zustand des Fahrzeugkatalysators, abhängt.

Um eine fälschliche Erkennung auf den Defekt der zweiten Lambdasonde aufgrund dieses Einflusses des Fahrzeugkatalysators zu vermeiden, wird daher zusätzlich zu dem Signalgradient die Signalverzögerung für die Diagnose der zweiten Lambdasonde herangezogen. So wird im Falle des Unterschreitens des Signalgradientenschwellenwerts durch den Signalgradient nur dann auf den Defekt der zweiten Lambdasonde erkannt, falls auch die Signalverzögerung größer ist als der Signalverzögerungsschwellenwert. Auch der Signalverzögerungsschwellenwert ist bevorzugt empirisch ermittelt und weist einen Wert auf, ab welchem davon ausgegangen werden kann, dass die zweite Lambdasonde defekt ist, insbesondere falls zusätzlich der Signalgradient kleiner ist als der Signalgradientenschwellenwert.

Zum Erkennen auf den Defekt der zweiten Lambdasonde ist es insoweit nicht hinreichend, dass lediglich der Signalgradient kleiner ist als der Signalgradientenschwellenwert. Vielmehr muss zusätzlich die Signalverzögerung größer als der Signalverzögerungsschwellenwert sein. In anderen Worten wird bei dem Unterschreiten des Signalgradientenschwellenwert durch den Signalgradient lediglich dann auf den Defekt der zweiten Lambdasonde erkannt, falls zugleich die Signalverzögerung größer ist als der Signalverzögerungsschwellenwert. Hierdurch wird eine zuverlässige Diagnose der zweiten Lambdasonde realisiert.

Zusätzlich oder alternativ können der Signalgradient und die Signalverzögerung für eine Diagnose des Fahrzeugkatalysators herangezogen werden. Vorstehend wurde bereits erläutert, dass der Messwert der zweiten Lambdasonde nicht lediglich stets dem Messwert der ersten Lambdasonde folgt, sondern dass der Messwert der zweiten Lambdasonde zusätzlich von dem Zustand des Fahrzeugkatalysators abhängt. Ist nun der Signalgradient kleiner als der Signalgradientenschwellenwert und zudem die Signalverzögerung kleiner als der Signalverzögerungsschwellenwert, so wird auf den Defekt des Fahrzeugkatalysators erkannt. Anders ausgedrückt wird bei dem Unterschreiten der Signalgradientenschwellenwert durch den Signalgradient lediglich dann auf den Defekt des Fahrzeugkatalysators erkannt, falls die Signalverzögerung kleiner ist als der Signalverzögerungsschwellenwert.

Vorzugsweise erfolgt die Diagnose der zweiten Lambdasonde und/oder des Fahrzeugkatalysators zweistufig. Zunächst wird lediglich der Signalgradient mit dem Signalgradientenschwellenwert verglichen und die Signalverzögerung wird zwar bestimmt, bleibt jedoch zunächst außer Betracht. Erst wenn der Signalgradient kleiner ist als der Signalgradientenschwellenwert, wird in einem zweiten Schritt die Signalverzögerung mit dem Signalverzögerungsschwellenwert verglichen. Ist die Signalverzögerung größer als der Signalverzögerungsschwellenwert, so wird auf den Defekt der zweiten Lambdasonde erkannt. Zusätzlich oder alternativ kann auf die Funktionsfähigkeit des Fahrzeugkatalysators erkannt werden. Ist jedoch die Signalverzögerung kleiner als der Signalverzögerungsschwellenwert, so wird auf den Defekt des Fahrzeugkatalysators erkannt. Zusätzlich oder alternativ kann auf die Funktionsfähigkeit der zweiten Lambdasonde erkannt werden.

Die beschriebene Vorgehensweise ermöglicht eine besonders genaue Diagnose der zweiten Lambdasonde und/oder des Fahrzeugkatalysators. Insbesondere wird eine fälschliche Erkennung auf den Defekt der zweiten Lambdasonde effektiv vermieden, indem nicht nur eine Größe, nämlich der Signalgradient, für die Diagnose herangezogen wird, sondern zusätzlich eine weitere Größe, nämlich die Signalverzögerung. Diese Vorgehensweise erlaubt zudem - optional - eine Aussage über den Zustand des Fahrzeugkatalysators.

Eine Weiterbildung der Erfindung sieht vor, dass als Signalgradient der größte zwischen dem ersten Signalsprung und dem zweiten Signalsprung auftretende Gradient des Messwerts der zweiten Lambdasonde verwendet wird. Beispielsweise wird hierzu der Gradient des Messwerts der zweiten Lambdasonde zwischen dem ersten Signalsprung und dem zweiten Signalsprung durchgehend oder periodisch ermittelt. Der in diesem Zeitraum auftretende größte Gradient wird als Signalgradient herangezogen. Vorzugsweise ist der Signalgradient vorzeichenbereinigt, entspricht also einem Absolutwert des größten Gradienten zwischen den beiden Signalsprüngen. Hierdurch wird eine hohe Genauigkeit bei der Diagnose der zweiten Lambdasonde erzielt.

Eine Weiterbildung der Erfindung sieht vor, dass als Signalverzögerung eine Zeitdauer verwendet wird, die zwischen dem zweiten Signalsprung und einem Vorzeichenwechsel des Gradienten des Messwerts der zweiten Lambdasonde vorliegt. Wie bereits erläutert, entspricht die Signalverzögerung der Zeitdauer, nach deren Ablauf der Messwert der zweiten Lambdasonde eine Reaktion auf den zweiten Signalsprung zeigt. Als Kriterium für die Reaktion dient der Vorzeichenwechsel des Gradienten des Messwerts der zweiten Lambdasonde. Dieser Vorzeichenwechsel tritt auf, da der zweite Signalsprung eine Auslenkung des Messwerts der ersten Lambdasonde in einer anderen Richtung beschreibt als er bei dem ersten Signalsprung auftritt. Während sich also der Messwert der ersten Lambdasonde bei dem ersten Signalsprung in die erste Richtung verändert, verändert er sich bei dem zweiten Signalsprung in die zweite Richtung, welche der ersten Richtung entgegengesetzt ist. Entsprechend kann die Signalverzögerung anhand des Vorzeichenwechsels mit hoher Genauigkeit bestimmt werden.

Eine Weiterbildung der Erfindung sieht vor, dass auf den ersten Signalsprung und/oder auf den zweiten Signalsprung erkannt wird, wenn sich der Messwert der ersten Lambdasonde von einem Wert von größer oder gleich eins auf einen Wert von kleiner oder gleich eins oder von einem Wert von kleiner oder gleich eins auf einen Wert von größer oder gleich eins unter Überschreitung einer bestimmten Wertedifferenz verändert. Für das Vorliegen des ersten Signalsprungs beziehungsweise des zweiten Signalsprungs ist es damit stets notwendig, dass sich der Messwert der ersten Lambdasonde während des jeweiligen Signalsprungs um die bestimmte Wertedifferenz verändert, wobei unter der Wertedifferenz eine Differenz des Messwerts der ersten Lambdasonde unmittelbar vor dem jeweiligen Signalsprung zu ihrem Messwert unmittelbar nach dem jeweiligen Signalsprung zu verstehen ist.

Im Rahmen des Signalsprungs ändert sich der Messwert beispielsweise von einem Wert von größer als eins auf den Wert von eins oder auf einen Wert von kleiner eins. Ebenso kann er sich von dem Wert von eins auf den Werkt von kleiner als eins verändern. Umgekehrt gilt entsprechendes. Unter dem Messwert der ersten Lambdasonde von eins ist hierbei ein Messwert zu verstehen, welcher einem stöchiometrischen Verbrennungsluftverhältnis entspricht. Analog hierzu entspricht der Messwert der ersten Lambdasonde von größer als eins einem Luftüberschuss und ein Wert von kleiner als eins einem Luftmangel in dem Abgas.

Die Wertedifferenz muss beispielsweise mindestens 0,01, mindestens 0,02, mindestens 0,03, mindestens 0,04 oder mindestens 0,05 entsprechen, wobei die letzteren beiden Werte bevorzugt sind. Es kann auch vorgesehen sein, dass die Wertedifferenz für das Erkennen auf den ersten Signalsprung größer ist als die Wertedifferenz für das Erkennen auf den zweiten Signalsprung. Beispielsweise ist erstere um einen Faktor von mindestens 1,5, mindestens 1,75 oder mindestens 2,0 größer als letztere. In diesem Fall wird auf den ersten Signalsprung beispielsweise erst dann erkannt, wenn die Wertedifferenz mindestens 0,05, mindestens 0,075 oder mindestens 0,10 beträgt, wohingegen auf den zweiten Signalsprung bereits dann erkannt wird, wenn die Wertedifferenz zwischen 0,01 und 0,05 (oder mehr) beträgt.

Besonders bevorzugt wird lediglich dann auf den ersten Signalsprung erkannt, wenn der Messwert der ersten Lambdasonde einen Wechsel von Luftüberschuss nach Luftmangel anzeigt. Auf den zweiten Signalsprung wird beispielsweise lediglich dann erkannt, wenn auf einen Wechsel von Luftmangel zumindest auf ein stöchiometrisches Verbrennungsluftverhältnis oder Luftüberschuss erkannt wird. Hierdurch wird eine hohe Genauigkeit der Diagnose der zweiten Lambdasonde erzielt.

Eine Weiterbildung der Erfindung sieht vor, dass bei einem Überschreiten des Signalgradientenschwellenwerts durch den Signalgradient auf eine Funktionsfähigkeit der zweiten Lambdasonde erkannt wird. Sofern also der Signalgradient größer ist als der Signalgradientenschwellenwert, so kann zuverlässig davon ausgegangen werden, dass die zweite Lambdasonde funktioniert. Eine Auswertung der Signalverzögerung kann in diesem Fall unterbleiben. Beispielsweise kann also bereits unmittelbar nach dem zweiten Signalsprung und ohne Ermittlung der Signalverzögerung die Funktionsfähigkeit der zweiten Lambdasonde festgestellt werden, nämlich wenn der Signalgradient den Signalgradientenschwellenwert überschreitet. Dies ermöglicht eine besonders rasche Auswertung. Zum Beispiel ist es vorgesehen, lediglich bei dem Unterschreiten des Signalgradientenschwellenwerts durch den Signalgradient die Signalverzögerung zu ermitteln. Bei dem Überschreiten des Signalgradientenschwellenwerts durch den Signalgradient unterbleibt das Ermitteln der Signalverzögerung hingegen.

Eine Weiterbildung der Erfindung sieht vor, dass bei einem Unterschreiten des Signalgradientenschwellenwerts durch den Signalgradient und zusätzlichem Unterschreiten des Signalverzögerungsschwellenwerts durch die Signalverzögerung auf eine Funktionsfähigkeit der zweiten Lambdasonde erkannt wird. In anderen Worten wird nur dann auf den Defekt der zweiten Lambdasonde erkannt, falls zum einen der Signalgradient den Signalgradientenschwellenwert unterschreitet und zum anderen die Signalverzögerung größer ist als der Signalverzögerungsschwellenwert. Trifft eine der Bedingungen nicht zu, so wird von der Funktionsfähigkeit der zweiten Lambdasonde ausgegangen. Wie vorstehend bereits erläutert, kann in Abhängigkeit von dem Signalgradient sogar auf die Auswertung der Signalverzögerung verzichtet werden. Hierdurch ist eine rasche und genaue Diagnose der zweiten Lambdasonde möglich.

Eine Weiterbildung der Erfindung sieht vor, dass bei Überschreiten des Signalverzögerungsschwellenwerts durch die Signalverzögerung stets auf den Defekt der zweiten Lambdasonde erkannt wird. Wird die Signalverzögerung ausgewertet, beispielsweise in Abhängigkeit von dem Wert des Signalgradienten, so wird immer dann auf den Defekt der zweiten Lambdasonde erkannt, sofern die Signalverzögerung größer ist als der Signalverzögerungsschwellenwert. Es ist also insbesondere unerheblich, ob das Auswerten der Signalverzögerung lediglich in Abhängigkeit von dem Wert des Signalgradienten vorgenommen wird oder ob die Signalverzögerung stets, unabhängig von dem Wert des Signalgradienten, ermittelt wird. Ist das genannte Kriterium erfüllt, so wird stets auf den Defekt der zweiten Lambdasonde erkannt.

Eine Weiterbildung der Erfindung sieht vor, dass bei Überschreiten des Signalverzögerungsschwellenwerts durch die Signalverzögerung der Signalgradient mit dem Signalgradientenschwellenwert verglichen wird, wobei bei einem Unterschreiten eines weiteres Signalgradientenschwellenwerts durch den Signalgradienten auf den Defekt des Fahrzeugkatalysators und bei einem Überschreiten des weiteren Signalgradientenschwellenwerts durch den Signalgradienten auf eine Funktionsfähigkeit des Fahrzeugkatalysators erkannt wird. Hierdurch ist zusätzlich zu der Diagnose der zweiten Lambdasonde auch die Diagnose des Fahrzeugkatalysators durchführbar.

Zwar wird bei dem Überschreiten des Signalverzögerungsschwellenwerts durch die Signalverzögerung stets von dem Defekt der zweiten Lambdasonde ausgegangen. Eine eindeutige Aussage über den Zustand des Fahrzeugkatalysators kann jedoch mithilfe des weiteren Signalgradientenschwellenwerts ermittelt werden. Der weitere Signalgradientenschwellenwert ist niedriger als der Signalgradientenschwellenwert. Bei dem Unterschreiten des Signalgradientenschwellenwerts durch den Signalgradient liegt ein Verdacht auf den Defekt des Fahrzeugkatalysators vor. Aus diesem Grund wird eine differenziertere Betrachtung unter Verwendung des weiteren Signalgradientenschwellenwerts vorgenommen.

Ist der Signalgradient kleiner als der weitere Signalgradientenschwellenwert, so kann sicher von dem Defekt des Fahrzeugkatalysators, zusätzlich zu dem Defekt der zweiten Lambdasonde ausgegangen werden. Überschreitet hingegen der Signalgradient dem weiteren Signalgradientenschwellenwert, liegt also der Signalgradient zwischen dem weiteren Signalgradientenschwellenwert und dem Signalgradientenschwellenwert, so kann von der Funktionsfähigkeit des Fahrzeugkatalysators ausgegangen werden, zumindest einer eingeschränkten Funktionsfähigkeit. Die beschriebene Vorgehensweise ermöglicht nicht nur eine Diagnose der zweiten Lambdasonde, sondern zusätzlich auch des Fahrzeugkatalysators.

Eine Weiterbildung der Erfindung sieht vor, dass der weitere Signalgradientenschwellenwert kleiner gewählt wird als der Signalgradientenschwellenwert. Hierauf wurde vorstehend bereits hingewiesen. Beispielsweise beträgt der weitere Signalgradientenschwellenwert höchstens 75 %, höchstens 60 % oder höchstens 50 % des Signalgradientenschwellenwerts. Eine derartige Wahl des weiteren Signalgradientenschwellenwerts ermöglicht die differenzierte Betrachtung der Funktionsfähigkeit des Fahrzeugkatalysators.

Die Erfindung betrifft weiterhin eine Abgasreinigungseinrichtung für ein Kraftfahrzeug, insbesondere zur Durchführung des Verfahrens gemäß den Ausführungen im Rahmen dieser Beschreibung, wobei die Abgasreinigungseinrichtung über einen Fahrzeugkatalysator, eine stromaufwärts des Fahrzeugkatalysators angeordnete erste Lambdasonde und eine stromabwärts des Fahrzeugkatalysators angeordnete zweite Lambdasonde verfügt, wobei die Abgasreinigungseinrichtung dazu vorgesehen und ausgestaltet ist, zeitlich zwischen einem ersten Signalsprung eines Messwerts der ersten Lambdasonde in eine erste Richtung und einem zweiten Signalsprung des Messwerts in eine der ersten Richtung entgegengesetzte zweite Richtung einen Signalgradient und nach dem zweiten Signalsprung eine Signalverzögerung eines Messwerts der zweiten Lambdasonde zu ermitteln, wobei die Signalverzögerung einer Zeitdauer zwischen dem zweiten Signalsprung und einer Reaktion des Messwerts der zweiten Lambdasonde auf den zweiten Signalsprung entspricht.

Dabei ist die Abgasreinigungseinrichtung weiter dazu vorgesehen und ausgestaltet, dass auf einen Defekt des Fahrzeugkatalysators erkannt wird, falls der Signalgradient kleiner als ein Signalgradientenschwellenwert und die Signalverzögerung kleiner als ein Signalverzögerungsschwellenwert ist.

Auf die Vorteile einer derartigen Ausgestaltung der Abgasreinigungseinrichtung sowie einer derartigen Vorgehensweise wurde bereits hingewiesen. Sowohl die Abgasreinigungseinrichtung als auch das Verfahren zu ihrem Betreiben können gemäß den Ausführungen im Rahmen dieser Beschreibung weitergebildet sein, sodass insoweit auf diese verwiesen wird.

Die in der Beschreitung beschriebenen Merkmale und Merkmalskombinationen, insbesondere die in der nachfolgenden Figurenbeschreibung beschriebenen und/oder in den Figuren gezeigten Merkmale und Merkmalskombinationen, sind nicht nur in der jeweils angegebenen Kombination, sondern auch in anderen Kombinationen oder in Alleinstellung verwendbar, ohne den Rahmen der Erfindung zu verlassen. Es sind somit auch Ausführungsformen als von der Erfindung erfasst anzusehen, die in der Beschreibung und/oder den Figuren nicht explizit gezeigt oder erläutert sind, jedoch durch Merkmalskombinationen aus den erläuterten Ausführungsformen hervorgehen oder aus ihnen ableitbar sind.

Die Erfindung wird nachfolgend anhand der in der Zeichnung dargestellten Ausführungsbeispiele näher erläutert, ohne dass eine Beschränkung der Erfindung erfolgt. Dabei zeigt:
- Figur 1: eine schematische Darstellung einer Antriebseinrichtung für ein Kraftfahrzeug, sowie
- Figur 2: zwei Diagramme, anhand welchen ein Verfahren zum Betreiben einer Abgasreinigungseinrichtung der Antriebseinrichtung erläutert wird.

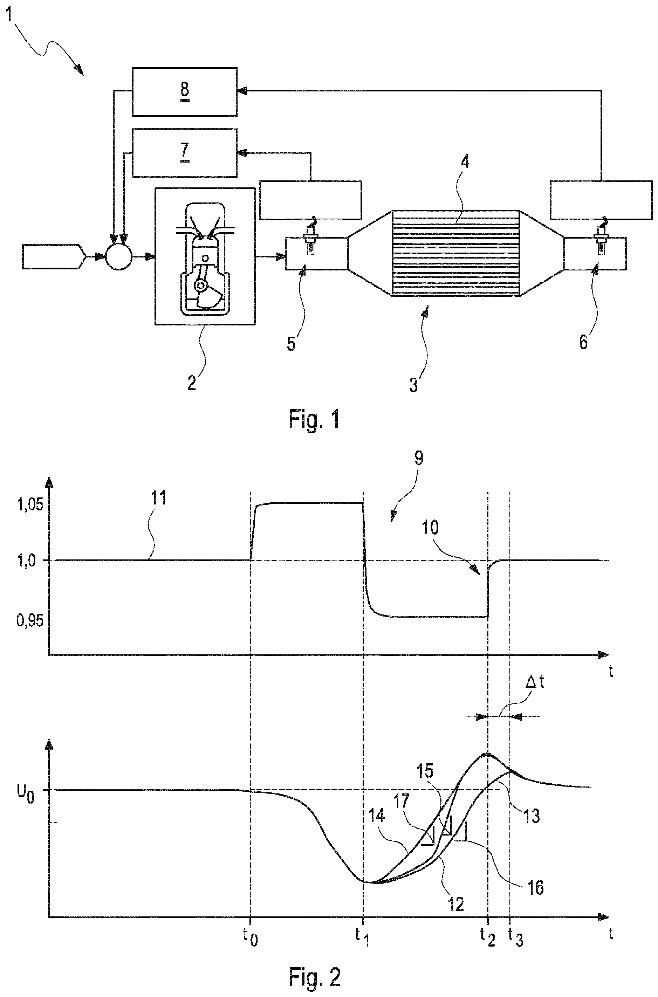

Die Figur 1 zeigt eine schematische Darstellung einer Antriebseinrichtung 1 für ein Kraftfahrzeug. Die Antriebseinrichtung 1 verfügt über ein Abgas erzeugendes Antriebsaggregat 2, in dem hier dargestellten Ausführungsbeispiel über eine Brennkraftmaschine. Das von dem Antriebsaggregat 2 erzeugte Abgas wird einer Abgasreinigungseinrichtung 3 zugeführt, welche zusätzlich zu einem Fahrzeugkatalysator 4 eine erste Lambdasonde 5 und eine zweite Lambdasonde 6 aufweist. Die erste Lambdasonde 5 ist bezüglich einer Strömungsrichtung des Abgases stromaufwärts des Fahrzeugkatalysators 4 und die zweite Lambdasonde 6 stromabwärts des Fahrzeugkatalysators 4 angeordnet. Ein Messwert der ersten Lambdasonde 5 wird einem ersten Regler 7 zugeführt, welcher eine Lambdaregelung des Antriebsaggregats 2 vornimmt. Ein Messwert der zweiten Lambdasonde 6 wird hingegen einem zweiten Regler 8 zugeführt, der eine Trimmregelung vornimmt, welche Abweichungen des Messwerts der ersten Lambdasonde 5 korrigiert.

Die Figur 2 zeigt zwei Diagramme, anhand welcher ein Verfahren zum Betreiben der Abgasreinigungseinrichtung 3 der Antriebseinrichtung 1 erläutert wird. Ein oberes der Diagramme zeigt den Verlauf eines Messwerts der ersten Lambdasonde 5 über der Zeit t. Die Messwerte sind dabei als Verbrennungsluftverhältnis Lambda zu verstehen, wobei λ = 1 einem stöchiometrischem Verbrennungsluftverhältnis entspricht. Ein unteres der Diagramme zeigt den Verlauf der Messwerte der zweiten Lambdasonde 6 über der Zeit t. Diese Messwerte sind als elektrische Spannungen zu verstehen, wobei bei einem stöchiometrischen Verbrennungsluftverhältnis die Spannung U₀ vorliegt.

Im Rahmen des Verfahrens zum Betreiben der Abgasreinigungseinrichtung 3 wird eine Diagnose der zweiten Lambdasonde 6 vorgenommen. Das Antriebsaggregat 2 wird hierbei derart betrieben, dass die Messwerte der ersten Lambdasonde 5 über der Zeit t mehrere Signalsprünge aufweisen, insbesondere einen ersten Signalsprung 9 und einen zweiten Signalsprung 10. Die beiden Signalsprünge 9 und 10 sind in einem Verlauf 11 der Messwerte der ersten Lambdasonde 5 über der Zeit t deutlich zu erkennen. Beispielsweise ist es vorgesehen, das Antriebsaggregat 2 derart zu betreiben, dass in einem Zeitpunkt t₀ ausgehend von einem stöchiometrischen Verbrennungsluftverhältnis ein Verbrennungsluftverhältnis von größer als eins eingestellt wird, insbesondere ein Verbrennungsluftverhältnis von 1,05.

Zur Erzeugung des ersten Signalsprungs 9 wird in dem Zeitpunkt t₁ das Antriebsaggregat 2 derart angesteuert, dass das Verbrennungsluftverhältnis unter eins absinkt, insbesondere auf 0,95. Der erste Signalsprung 9 umfasst also eine Änderung des Messwerts der ersten Lambdasonde 5 um eine Differenz von 0,1. Zur Erzeugung des zweiten Signalsprungs 10 in dem Zeitpunkt t₂ wird das Antriebsaggregat 2 derart angesteuert, dass das Verbrennungsluftverhältnis ausgehend von dem Wert von weniger als eins auf den Wert von eins eingestellt wird. Dieser Wert wird nachfolgend zumindest bis zu einem Zeitpunkt t₃ beibehalten.

In Abhängigkeit von einem Zustand der zweiten Lambdasonde 6 und des Fahrzeugkatalysators 4 ergeben sich für den Messwert der zweiten Lambdasonde 6 unterschiedlicher Verläufe 12, 13 und 14. Der Verlauf 12 zeigt die Messwerte über der Zeit t im Falle einer Funktionsfähigkeit der zweiten Lambdasonde 6 und einer Funktionsfähigkeit des Fahrzeugkatalysators 4. Der Verlauf 13 zeigt die Messwerte der zweiten Lambdasonde 6 über der Zeit t im Falle eines Defekts der zweiten Lambdasonde 6 bei gleichzeitiger Funktionsfähigkeit des Fahrzeugkatalysators 4. Der Verlauf 14 hingegen zeigt den Messwert der zweiten Lambdasonde 6 über der Zeit bei funktionierender zweiter Lambdasonde 6, welche jedoch aufgrund eines gegebenen Betriebszustands des Fahrzeugkatalysators 4 von dem Verlauf 12 abweicht.

Zur Diagnose der zweiten Lambdasonde 6 ist es vorgesehen, zwischen den Signalsprüngen 9 und 10 einen Signalgradient 15, 16 beziehungsweise 17 für die Verläufe 12, 13 und 14 zu ermitteln. Dies ist lediglich angedeutet. Ist der jeweilige Signalgradient 15, 16 beziehungsweise 17 größer als ein Signalgradientenschwellenwert, so wird von der Funktionsfähigkeit der zweiten Lambdasonde 6 ausgegangen. Für den Verlauf 12 trifft die genannte Bedingung zu, sodass unmittelbar die Funktionsfähigkeit der zweiten Lambdasonde 6 festgestellt werden kann. Als Vergleich ist der Verlauf 13 gezeigt, für welchen der Signalgradient 16 kleiner ist als der Signalgradientenschwellenwert. In diesem Fall kann unmittelbar auf den Defekt der zweiten Lambdasonde 6 erkannt werden.

Für den Verlauf 14 ist jedoch der Signalgradient kleiner als Signalgradientenschwellenwert, obwohl die zweite Lambdasonde 6 grundsätzlich funktionsfähig ist. Aus diesem Grund ist es vorgesehen, zumindest im Falle des Unterschreitens des Signalgradientenschwellenwerts durch den Signalgradient nach dem zweiten Signalsprung 10 eine Signalverzögerung Δt zu ermitteln. Die Signalverzögerung Δt beschreibt den Zeitraum, nach welchem der Messwert der zweiten Lambdasonde 6 auf den zweiten Signalsprung 10 reagiert. Es ist erkennbar, dass für die Verläufe 12 und 14 die Reaktion nahezu unmittelbar erfolgt, sodass die entsprechende Signalverzögerung den Signalverzögerungsschwellenwert jeweils unterschreitet. Für den Verlauf 13 ist die Signalverzögerung Δt jedoch größer als der Signalverzögerungsschwellenwert. In diesem Fall kann auf den Defekt der zweiten Lambdasonde 6 erkannt werden.

Anhand sowohl des Signalgradienten als auch der Signalverzögerung kann zuverlässig erkannt werden, ob die zweite Lambdasonde 6 funktionsfähig oder defekt ist. So wird lediglich dann bei Unterschreiten des Signalgradientenschwellenwerts durch den Signalgradient auf den Defekt der zweiten Lambdasonde 6 erkannt, sofern auch die Signalverzögerung Δt größer ist als der Signalverzögerungsschwellenwert. Ist dies der Fall, so wird auf die Funktionsfähigkeit der zweiten Lambdasonde 6 erkannt, wenngleich der Signalgradient kleiner ist als der Signalgradientenschwellenwert. Diese Vorgehensweise ermöglicht eine zuverlässige Diagnose des Fahrzeugkatalysators 4 und optional der zweiten Lambdasonde 6.

### BEZUGSZEICHENLISTE:

- 1: Antriebseinrichtung
- 2: Antriebsaggregat
- 3: Abgasreinigungseinrichtung
- 4: Fahrzeugkatalysator
- 5: 1. Lambdasonde
- 6: 2. Lambdasonde
- 7: 1. Regler
- 8: 2. Regler
- 9: 1. Signalsprung
- 10: 2. Signalsprung
- 11: Verlauf
- 12: Verlauf
- 13: Verlauf
- 14: Verlauf
- 15: Signalgradient
- 16: Signalgradient
- 17: Signalgradient

## Patentansprüche

1. Verfahren zum Betreiben einer Abgasreinigungseinrichtung (1) für ein Kraftfahrzeug, wobei die Abgasreinigungseinrichtung (3) über einen Fahrzeugkatalysator (4), eine stromaufwärts des Fahrzeugkatalysators (4) angeordnete erste Lambdasonde (5) und eine stromabwärts des Fahrzeugkatalysators (4) angeordnete zweite Lambdasonde (6) verfügt, wobei zeitlich zwischen einem ersten Signalsprung (9) eines Messwerts der ersten Lambdasonde (5) in eine erste Richtung und einem zweiten Signalsprung (10) des Messwerts in eine der ersten Richtung entgegengesetzte zweite Richtung ein Signalgradient (15,16,17) und nach dem zweiten Signalsprung (10) eine Signalverzögerung eines Messwerts der zweiten Lambdasonde (6) ermittelt wird, wobei die Signalverzögerung einer Zeitdauer zwischen dem zweiten Signalsprung (10) und einer Reaktion des Messwerts der zweiten Lambdasonde (6) auf den zweiten Signalsprung (10) entspricht, **dadurch gekennzeichnet, dass** auf einen Defekt des Fahrzeugkatalysators (4) erkannt wird, falls der Signalgradient (15,16,17) kleiner als ein Signalgradientenschwellenwert und die Signalverzögerung kleiner als ein Signalverzögerungsschwellenwert ist.

2. Verfahren nach Anspruch 1, **dadurch gekennzeichnet, dass** auf einen Defekt der zweiten Lambdasonde (6) erkannt wird, falls der Signalgradient (15,16,17) kleiner als der Signalgradientenschwellenwert und die Signalverzögerung größer als der Signalverzögerungsschwellenwert ist.

3. Verfahren nach einem der vorhergehenden Ansprüche, **dadurch gekennzeichnet, dass** als Signalgradient (15,16,17) der größte zwischen dem ersten Signalsprung (9) und dem zweiten Signalsprung (10) auftretende Gradient des Messwerts der zweiten Lambdasonde (6) verwendet wird.

4. Verfahren nach einem der vorhergehenden Ansprüche, **dadurch gekennzeichnet, dass** als Signalverzögerung eine Zeitdauer verwendet wird, die zwischen dem zweiten Signalsprung (10) und einem Vorzeichenwechsel des Gradienten des Messwerts der zweiten Lambdasonde (6) vorliegt.

5. Verfahren nach einem der vorhergehenden Ansprüche, **dadurch gekennzeichnet, dass** auf den ersten Signalsprung (9) und/oder auf den zweiten Signalsprung (10) erkannt wird, wenn sich der Messwert der ersten Lambdasonde (5) von einem Wert von größer oder gleich eins auf einen Wert von kleiner oder gleich eins oder von einem Wert von kleiner oder gleich eins auf einen Wert von größer oder gleich eins unter Überschreitung einer bestimmten Wertedifferenz verändert.

6. Verfahren nach einem der vorhergehenden Ansprüche, **dadurch gekennzeichnet, dass** bei einem Überschreiten des Signalgradientenschwellenwerts durch den Signalgradient (15,16,17) auf eine Funktionsfähigkeit der zweiten Lambdasonde (6) erkannt wird.

7. Verfahren nach einem der vorhergehenden Ansprüche, **dadurch gekennzeichnet, dass** bei einem Unterschreiten des Signalgradientenschwellenwerts durch den Signalgradient (15,16,17) und zusätzlichem Unterschreiten des Signalverzögerungsschwellenwerts durch die Signalverzögerung auf eine Funktionsfähigkeit der zweiten Lambdasonde (6) erkannt wird.

8. Verfahren nach Anspruch 2, **dadurch gekennzeichnet, dass** bei Überschreiten des Signalverzögerungsschwellenwerts durch die Signalverzögerung der Signalgradient (15,16,17) mit dem Signalgradientenschwellenwert verglichen wird, wobei bei einem Unterschreiten eines weiteren Signalgradientenschwellenwerts durch den Signalgradienten (15,16,17) auf den Defekt des Fahrzeugkatalysators (4) und bei einem Überschreiten des weiteren Signalgradientenschwellenwerts durch den Signalgradienten auf eine Funktionsfähigkeit des Fahrzeugkatalysators (4) erkannt wird, wobei der weitere Signalgradientenschwellenwert kleiner gewählt wird als der Signalgradientenschwellenwert.

9. Abgasreinigungseinrichtung (3) für ein Kraftfahrzeug, insbesondere zur Durchführung des Verfahrens nach einem oder mehreren der vorhergehenden Ansprüche, wobei die Abgasreinigungseinrichtung (3) über einen Fahrzeugkatalysator (4), eine stromaufwärts des Fahrzeugkatalysators (4) angeordnete erste Lambdasonde (5) und eine stromabwärts des Fahrzeugkatalysators (4) angeordnete zweite Lambdasonde (6) verfügt, wobei die Abgasreinigungseinrichtung (3) dazu vorgesehen und ausgestaltet ist, zeitlich zwischen einem ersten Signalsprung (9) eines Messwerts der ersten Lambdasonde (5) in eine erste Richtung und einem zweiten Signalsprung (10) des Messwerts in eine der ersten Richtung entgegengesetzte zweite Richtung einen Signalgradient (15,16,17) und nach dem zweiten Signalsprung (10) eine Signalverzögerung eines Messwerts der zweiten Lambdasonde (6) zu ermitteln, wobei die Signalverzögerung einer Zeitdauer zwischen dem zweiten Signalsprung (10) und einer Reaktion des Messwerts der zweiten Lambdasonde (6) auf den zweiten Signalsprung (10) entspricht, **dadurch gekennzeichnet, dass** die Abgasreinigungseinrichtung (3) weiterhin dazu vorgesehen und ausgestaltet ist, auf einen Defekt des Fahrzeugkatalysators (4) zu erkennen, falls der Signalgradient (15,16,17) kleiner als ein Signalgradientenschwellenwert und die Signalverzögerung kleiner als ein Signalverzögerungsschwellenwert ist.

## Claims

1. Method for operating an exhaust gas cleaning device (1) for a motor vehicle, wherein the exhaust gas cleaning device (3) has a vehicle catalytic converter (4), a first lambda probe (5) arranged upstream of the vehicle catalytic converter (4), and a second lambda probe (6) arranged downstream of the vehicle catalytic converter (4), wherein a signal gradient (15, 16, 17) is determined chronologically between a first signal jump (9) of a measured value of the first lambda probe (5) and a second signal jump (10) of the measured value in a second direction opposite to the first direction, and a signal delay of a measured value of the second lambda probe (6) is determined after the second signal jump (10), wherein the signal delay corresponds to a period of time between the second signal jump (10) and a reaction of the measured value of the second lambda probe (6) to the second signal jump (10), **characterized in that** a defect in the vehicle catalytic converter (4) is identified if the signal gradient (15, 16, 17) is less than a signal gradient threshold and the signal delay is less than a signal delay threshold value.

2. Method according to claim 1, **characterized in that** a defect of the second lambda probe (6) is identified if the signal gradient (15, 16, 17) is less than the signal gradient threshold value and the signal delay is greater than the signal delay threshold value.

3. Method according to any one of the preceding claims, **characterized in that** the greatest gradient of the measured value of the second lambda probe (6) occurring between the first signal jump (9) and the second signal jump (10) is used as the signal gradient (15, 16, 17).

4. Method according to any one of the preceding claims, **characterized in that** a period of time between the second signal jump (10) and a sign change of the gradient of the measured value of the second lambda probe (6) is used as the signal delay.

5. Method according to any one of the preceding claims, **characterized in that** the first signal jump (9) and/or the second signal jump (10) is identified when the measured value of the first lambda probe (5) changes from a value of greater than or equal to one to a value less than or equal to one or from a value less than or equal to one to a value greater than or equal to one while exceeding a specific value difference.

6. Method according to any one of the preceding claims, **characterized in that** when the signal gradient (15, 16, 17) exceeds the signal gradient threshold value, a functional capability of the second lambda probe (6) is identified.

7. Method according to any one of the preceding claims, **characterized in that** when the signal gradient (15, 16, 17) falls below the signal gradient threshold value and in addition the signal delay falls below the signal delay threshold value, a functional capability of the second lambda probe (6) is identified.

8. Method according to claim 2, **characterized in that** when the signal delay exceeds the signal delay threshold value, the signal gradient (15, 16, 17) is compared to the signal gradient threshold value, wherein if the signal gradient (15, 16, 17) falls below a further signal gradient threshold value, the defect of the vehicle catalytic converter (4) is identified, and if the signal gradient exceeds the further signal gradient threshold value, a functional capability of the vehicle catalytic converter (4) is identified, wherein the further signal gradient is selected to be smaller than the signal gradient threshold.

9. Exhaust gas cleaning device (3) for a motor vehicle, in particular for carrying out the method as claimed in any one or more of the preceding claims, wherein the exhaust gas cleaning device (3) has a vehicle catalytic converter (4), a first lambda probe (5) arranged upstream of the vehicle catalytic converter (4), and a second lambda probe (6) arranged downstream of the vehicle catalytic converter (4), wherein the exhaust gas cleaning device (3) is provided and designed to determine a signal gradient (15, 16, 17) chronologically between a first signal jump (9) of a measured value of the first lambda probe (5) and a second signal jump (10) of the measured value in a second direction opposite to the first direction, and a signal delay of a measured value of the second lambda probe (6) after the second signal jump (10), wherein the signal delay corresponds to a period of time between the second signal jump (10) and a reaction of the measured value of the second lambda probe (6) to the second signal jump (10), **characterized in that** the exhaust gas cleaning device (3) is further provided and designed to identify a defect in the vehicle catalytic converter (4) the signal gradient (15, 16, 17) less than a signal gradient threshold and the signal delay is less than a signal delay threshold value.

## Revendications

1. Procédé de fonctionnement d'un dispositif d'épuration de gaz d'échappement (1) pour un véhicule automobile, dans lequel le dispositif d'épuration de gaz d'échappement (3) est équipé d'un catalyseur de véhicule (4), d'une première sonde lambda (5) agencée en amont du catalyseur de véhicule (4) et d'une seconde sonde lambda (6) agencée en aval du catalyseur de véhicule (4), dans lequel un gradient de signal (15, 16, 17) est déterminé dans le temps entre un premier saut de signal (9) d'une valeur de mesure de la première sonde lambda (5) dans une première direction et un second saut de signal (10) de la valeur de mesure dans une seconde direction opposée à la première direction et, après le second saut de signal (10), un retard de signal d'une valeur de mesure de la seconde sonde lambda (6) est déterminé, dans lequel le retard de signal correspond à une durée écoulée entre le second saut de signal (10) et une réaction de la valeur de mesure de la seconde sonde lambda (6) au second saut de signal (10), **caractérisé en ce qu'**une défaillance du catalyseur de véhicule (4) est détectée si le gradient de signal (15, 16, 17) est inférieur à une valeur de seuil de gradient de signal et le retard de signal est inférieur à une valeur de seuil de retard de signal.

2. Procédé selon la revendication 1, **caractérisé en ce qu'**une défaillance de la seconde sonde lambda (6) est détectée si le gradient de signal (15, 16, 17) est inférieur à la valeur de seuil de gradient de signal et le retard de signal est supérieur à la valeur de seuil de retard de signal.

3. Procédé selon l'une quelconque des revendications précédentes, **caractérisé en ce que** le gradient de la valeur de mesure de la seconde sonde lambda (6) le plus élevé apparaissant entre le premier saut de signal (9) et le second saut de signal (10) est utilisé comme gradient de signal (15, 16, 17).

4. Procédé selon l'une quelconque des revendications précédentes, **caractérisé en ce qu'**une durée écoulée entre le second saut de signal (10) et un changement de signe du gradient de la valeur de mesure de la seconde sonde lambda (6) est utilisée comme retard de signal.

5. Procédé selon l'une quelconque des revendications précédentes, **caractérisé en ce que** le premier saut de signal (9) et/ou le second saut de signal (10) est détecté lorsque la valeur de mesure de la première sonde lambda (5) passe d'une valeur supérieure ou égale à un à une valeur inférieure ou égale à un ou d'une valeur inférieure ou égale à un à une valeur supérieure ou égale à un tout en dépassant une certaine différence de valeur.

6. Procédé selon l'une quelconque des revendications précédentes, **caractérisé en ce qu'**une capacité de fonctionnement de la seconde sonde lambda (6) est détectée lorsque le gradient de signal (15, 16, 17) dépasse la valeur de seuil de gradient de signal.

7. Procédé selon l'une quelconque des revendications précédentes, **caractérisé en ce qu'**une capacité de fonctionnement de la seconde sonde lambda (6) est détectée lorsque le gradient de signal (15, 16, 17) descend en dessous de la valeur de seuil de gradient de signal et lorsque le retard de signal descend de surcroit en dessous de la valeur de seuil de retard de signal.

8. Procédé selon la revendication 2, **caractérisé en ce que** le gradient de signal (15, 16, 17) est comparé à la valeur de seuil de gradient de signal lorsque le retard de signal dépasse la valeur de seuil de retard de signal, dans lequel une défaillance du catalyseur de véhicule (4) est détectée lorsque le gradient de signal (15, 16, 17) descend en dessous d'une valeur de seuil de gradient de signal supplémentaire, et une capacité de fonctionnement du catalyseur de véhicule (4) est détectée lorsque le gradient de signal descend en dessous de la valeur de seuil de gradient de signal supplémentaire, dans lequel la valeur de seuil de gradient de signal supplémentaire est choisie inférieure à la valeur de seuil de gradient de signal.

9. Dispositif d'épuration de gaz d'échappement (3) pour un véhicule automobile, en particulier permettant la mise en œuvre du procédé selon l'une quelconque ou plusieurs des revendications précédentes, dans lequel le dispositif d'épuration de gaz d'échappement (3) est équipé d'un catalyseur de véhicule (4), d'une première sonde lambda (5) agencée en amont du catalyseur de véhicule (4) et d'une seconde sonde lambda (6) agencée en aval du catalyseur de véhicule (4), dans lequel le dispositif d'épuration de gaz d'échappement (3) est prévu et conçu afin de déterminer dans le temps un gradient de signal (15, 16, 17) entre un premier saut de signal (9) d'une valeur de mesure de la première sonde lambda (5) dans une première direction et un second saut de signal (10) de la valeur de mesure dans une seconde direction opposée à la première direction et, après le second saut de signal (10), un retard de signal d'une valeur de mesure de la seconde sonde lambda (6), dans lequel le retard de signal correspond à une durée écoulée entre le second saut de signal (10) et une réaction de la valeur de mesure de la seconde sonde lambda (6) au second saut de signal (10), **caractérisé en ce que** le dispositif d'épuration de gaz d'échappement (3) est en outre prévu et conçu afin de détecter une défaillance du catalyseur de véhicule (4) si le gradient de signal (15, 16, 17) est inférieur à une valeur de seuil de gradient de signal et le retard de signal est inférieur à une valeur de seuil de retard de signal.
